# FASCICULE DE BREVET EUROPEEN

(11) **EP 2 443 004 B1**
(45) Date de publication et mention de la délivrance du brevet: **03.08.2016**
(21) Numéro de dépôt: 10734194.3
(22) Date de dépôt: 01.06.2010
(51) Int. Cl.: B60N 3/06

(54) **DISPOSITIF DE PROTECTION DE PIED D'UN CONDUCTEUR DE VEHICULE EN CAS DE CHOC FRONTAL.**
VORRICHTUNG FÜR DEN SCHUTZ DES FUSSES EINES FAHRZEUGLENKERS IM FALLE EINES FRONTALAUFPRALLS
DEVICE FOR PROTECTING THE FOOT OF A VEHICLE DRIVER IN THE EVENT OF FRONTAL IMPACT

(30) Priorité: 16.06.2009 FR 0954036
(43) Date de publication de la demande: 25.04.2012
(73) Titulaire: PEUGEOT CITROËN AUTOMOBILES SA, 78140 Vélizy-Villacoublay (FR)
(72) Inventeur: KORALEWSKI, Laurent, F-70110 Courchaton (FR)
(74) Mandataire: Fernandez, Francis Lionel
(86) Numéro de dépôt international: PCT/FR2010/051050
(87) Numéro de publication internationale: WO 2010/146271

(56) Documents cités:
- JP-A- 2004 155 278
- JP-A- 2006 062 582
- JP-U- 1 131 637

## Description

La présente invention se rapporte à un dispositif de protection de pied d'un conducteur, destiné à équiper un tablier de véhicule.

Lors d'accidents de la route, par exemple en cas de choc frontal, certaines parties du corps du conducteur sont susceptibles d'être projetées violemment contre des éléments de l'habitacle du véhicule. A cet égard, les véhicules actuels intègrent classiquement des éléments de sécurité passive comme des coussins gonflables afin de protéger la tête et le thorax du conducteur lors de projections contre le volant et/ou le tableau de bord.

De la même façon, lors d'un choc frontal, les membres inférieurs du conducteur, en particulier les pieds, sont projetés en avant et vers le haut et peuvent ainsi heurter le tablier du véhicule, c'est-à-dire la paroi séparant le compartiment moteur de l'habitacle, ou la colonne de direction.

Il est notamment connu du document JP2004130975 d'utiliser comme système de protection une plaque de renfort amovible, reposant sur le plancher et sur le tablier du véhicule. La plaque de renfort amovible est munie de moyens d'encliquetage au tablier et d'un repose-pied. Lors d'un choc frontal, la plaque de renfort se libère des moyens d'encliquetage par un mouvement arrière et protège le pied du conducteur lors d'une projection en avant de ses membres inférieurs.

De plus, le document JP2004155278 divulgué un dispositif de protection de pied d'un conducteur avec les caractéristiques du préambule de la revendication indépendante 1.

Un tel système de protection présente plusieurs inconvénients. Tout d'abord, la plaque de renfort amovible retient le pied dans le cas d'une projection en avant mais ne permet pas de retenir et/ou stabiliser le pied lors d'une projection vers le haut.

En outre, ce système ne permet pas de maintien latéral du pied. Or, le pied est notamment très vulnérable aux mouvements de torsion latérale tels que l'inversion et l'éversion qui sont respectivement le mouvement portant la pointe du pied en bas, en avant et en dedans et le mouvement portant la partie externe du pied en haut, en dehors et en arrière.

Enfin, lors d'un choc frontal, la projection en avant conduit à une position d'enfoncement maximal de la pédale par le conducteur. Or, ce système ne tient pas compte de l'interaction potentiellement dangereuse pour le pied du conducteur entre la pédale en position d'enfoncement maximal et la plaque de renfort se libérant des moyens d'encliquetage.

La présente invention a pour objet de remédier en tout ou partie aux inconvénients précités et consiste à cet effet en un dispositif de protection de pied d'un conducteur, destiné à équiper un tablier de véhicule, ledit dispositif comportant une embase surmontée d'une première marche suivant la direction de l'axe X'X, ladite première marche formant repose-pied et présentant une contremarche, dite première contremarche, ledit dispositif étant caractérisé en ce que ladite première contremarche et ladite embase définissent un logement conformé pour recevoir au moins un patin équipant une pédale.

Ainsi, la première marche assure la fonction de repose-pied et permet également de retenir le pied du conducteur dans le cas d'une projection en avant lors d'un choc frontal. Le logement défini par la contremarche et l'embase permet de recevoir au moins un patin équipant une pédale, évitant alors l'interaction dangereuse pour le pied du conducteur entre la première marche et la pédale en position d'enfoncement maximal.

Selon une caractéristique, l'embase et la première marche sont monobloc.

Dans un mode de réalisation de l'invention, la première marche est surmontée d'une seconde marche suivant la direction de l'axe X'X, ladite seconde marche présentant une contremarche, dite seconde contremarche, formant butée pour le pied du conducteur. Ainsi, la seconde contremarche permet de retenir le pied du conducteur lors d'une projection vers le haut, dans le cas d'un choc frontal.

Avantageusement, la seconde marche présente un giron, dit second giron, évidé de manière à présenter en section transversale à l'axe X'X une portion de forme complémentaire à une colonne de direction. Cette caractéristique permet d'intégrer aisément le dispositif à proximité de la colonne de direction.

Selon une autre caractéristique, la première marche et la seconde marche sont monobloc.

Selon un autre mode de réalisation, la première marche présente un giron, dit premier giron, comportant une plaque en saillie s'étendant dans un plan sensiblement perpendiculaire au plan dudit premier giron, suivant la direction de l'axe Y'Y. Ainsi, la plaque en saille contribue à améliorer le maintien latéral du pied et donc limiter les mouvements de torsion latérale du pied.

Préférentiellement, la première marche et la plaque en saillie sont monobloc.

Dans un mode de réalisation, le dispositif comporte en outre des moyens de fixation au tablier.

L'invention concerne également un véhicule automobile comportant un tablier sur lequel est fixé un pédalier, caractérisé en qu'il comporte un dispositif de protection tel que décrit précédemment disposé, selon la direction longitudinale du véhicule, entre le tablier et le pédalier.

D'autres caractéristiques de la présente invention apparaîtront à la lecture de la description détaillée ci-après d'un exemple de mise en oeuvre non limitatif, en faisant référence aux dessins annexés sur lesquels :
- la figure 1 est une vue en perspective d'un dispositif selon un premier mode de réalisation de l'invention ;
- la figure 2 est une vue en perspective d'un dispositif selon un deuxième mode de réalisation de l'invention ;
- la figure 3 est une vue en perspective du dispositif de la figure 1, équipant un tablier de véhicule.

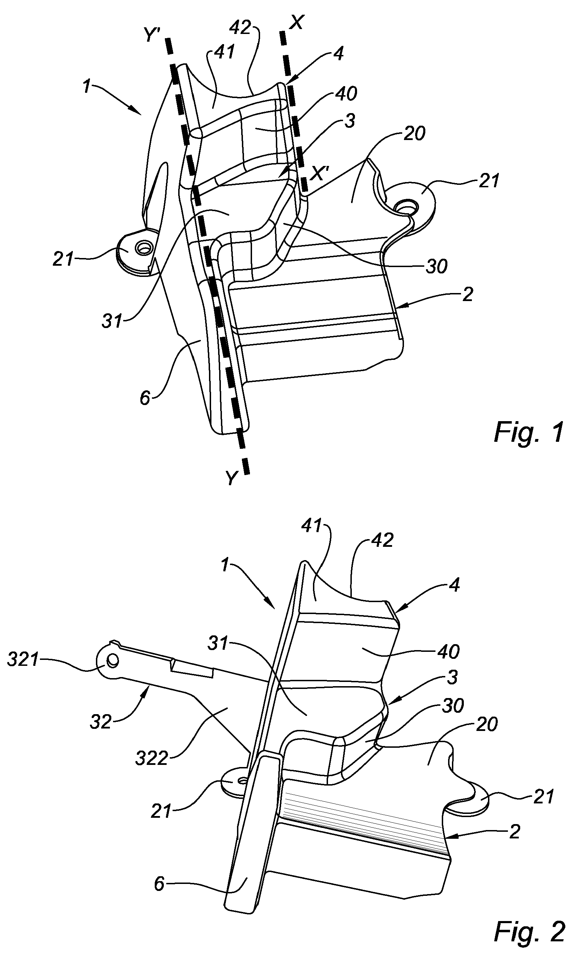

Dans le deuxième mode de réalisation illustré à la figure 2, on conviendra de désigner par les mêmes références les éléments identiques représentés à la figure 1, par souci de simplification de la description.

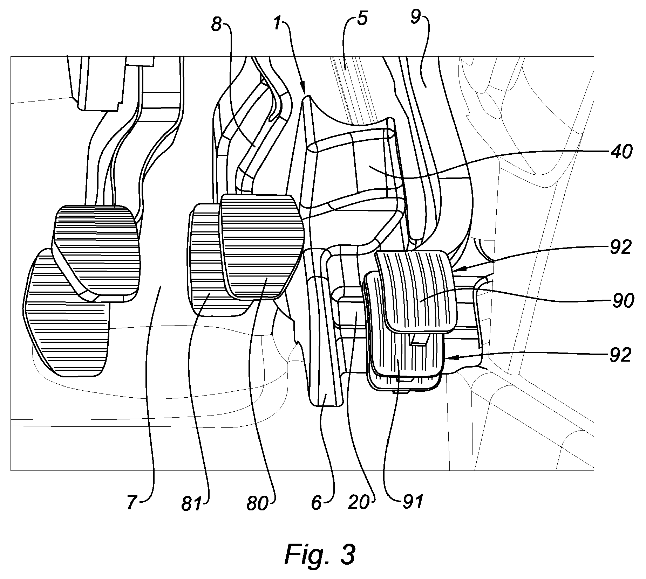

Le dispositif 1 illustré en figure 1 comporte une embase 2 surmontée d'une première marche 3 suivant la direction de l'axe X'X. La première marche 3 assure la fonction de repose-pied et présente une première contremarche 30 définissant avec l'embase 2 un logement 20 conformé pour recevoir un patin et une partie inférieure d'une pédale, non représentés sur la figure 1, mais visibles sur la figure 3.

De plus, la première marche 3 est surmontée d'une seconde marche 4 suivant la direction de l'axe X'X, la seconde marche 4 présentant une seconde contremarche 40 formant butée pour le pied du conducteur. La seconde marche présente un second giron 41, évidé de manière à présenter en section transversale à l'axe X'X une portion de forme 42 complémentaire à une colonne de direction 5, ladite colonne de direction 5 n'étant pas représentée sur la figure 1 mais visible sur la figure 3.

En outre, la première marche 3 présente un premier giron 31 comportant une plaque 6 en saillie s'étendant dans un plan sensiblement perpendiculaire au plan dudit premier giron 31, suivant la direction de l'axe Y'Y.

Par ailleurs, le dispositif 1 est muni de deux couronnes 21 fixées à l'embase 2, opérant comme moyens de fixation au tablier 7, lesdites couronnes 21 étant aptes à coopérer avec un ensemble vis-écrou, non représenté en figure 1.

Il est à noter que le dispositif 1 illustré en figure 1 est monobloc.

En figure 2 est illustré le dispositif 1 se différenciant de celui représenté à la figure 1 par le fait qu'il comporte en outre une branche 32 opérant comme moyen de fixation supplémentaire au tablier 7. La branche 32, s'étendant en saillie à partir de la plaque 6, présente une première extrémité 321 de forme annulaire apte à coopérer avec un ensemble vis-écrou, non représenté en figure 2. La branche 32 présente une seconde extrémité munie d'un épaulement interne 322, la seconde extrémité étant située au niveau de la première marche 3.

Le dispositif 1 illustré en figure 3 est fixé au tablier 7 d'un véhicule. Le dispositif 1 est ménagé entre une pédale de frein 8 et une pédale d'accélérateur 9, sensiblement face à la colonne de direction 5. La pédale de frein 8 et la pédale d'accélérateur 9, appartenant au pédalier du véhicule, sont respectivement montées mobiles entre une position de repos (80 respectivement 90) et une position d'enfoncement maximal (81 respectivement 91).

En cas de choc frontal, la projection en avant conduit à une position d'enfoncement maximal 91 de la pédale d'accélérateur 9 par le conducteur. Le patin 92 de la pédale d'accélérateur 9 vient alors dans le logement 20 défini par la première contremarche 30 et l'embase 2.

En cas de projection vers le haut provoquée par le choc frontal, le pied du conducteur est stoppé par la butée formée par la seconde contremarche 40, le pied se retrouve ainsi arrêté, au début du choc, avant les intrusions du tablier et de la colonne de direction dans l'habitacle du véhicule. De cette façon, la vitesse d'impact entre le pied et les pièces situées dans son environnement est diminuée ce qui permet de limiter les blessures du conducteur.

Par ailleurs, durant le choc frontal, la plaque en saillie 6 permet de limiter les torsions latérales du pied du conducteur.

Bien entendu, l'exemple de réalisation évoqué ci-dessus ne présente aucun caractère limitatif, et d'autres détails et améliorations peuvent être apportés au dispositif selon l'invention, sans pour autant sortir du cadre de l'invention où d'autres formes du dispositif peuvent être réalisées.

## Revendications

1. Dispositif de protection de pied d'un conducteur, destiné à équiper un tablier (7) de véhicule, ledit dispositif comportant une embase (2) surmontée d'une première marche (3) suivant la direction de l'axe X'X, ladite première marche (3) formant repose-pied et présentant une contremarche, dite première contremarche (30), ledit dispositif étant **caractérisé en ce que** la première marche (3) est surmontée d'une seconde marche (4) suivant la direction de l'axe X'X, ladite seconde marche (4) présentant une contremarche, dite seconde contremarche (40) et **en ce que** ladite première contremarche (30) et ladite embase (2) définissent un logement (20) conformé pour, dans une position d'enfoncement maximum d'une pédale, que un patin équipant ladite pédale puisse se positionner dans ledit logement (20) et que la seconde contremarche (40) forme une butée pour le pied du conducteur.

2. Dispositif selon la revendication 1, dans lequel l'embase (2) et la première marche (3) sont monobloc.

3. Dispositif selon la revendication 1 ou 2, dans lequel la seconde marche (4) présente un giron, dit second giron (41), évidé de manière à présenter en section transversale à l'axe X'X une portion de forme complémentaire à une colonne de direction (5).

4. Dispositif selon l'une quelconque des revendications précédentes, dans lequel la première marche (3) et la seconde marche (4) sont monobloc.

5. Dispositif selon l'une quelconque des revendications précédentes, dans lequel la première marche (3) présente un giron, dit premier giron (31), comportant une plaque (6) en saillie s'étendant dans un plan sensiblement perpendiculaire au plan dudit premier giron (31), suivant la direction de l'axe Y'Y.

6. Dispositif selon la revendication 5, dans lequel la première marche (3) et la plaque (6) en saillie sont monobloc.

7. Dispositif selon l'une quelconque des revendications précédentes, comportant en outre des moyens de fixation au tablier (7).

8. Véhicule automobile comportant un tablier (7) sur lequel est fixé un pédalier, caractérisé en qu'il comporte un dispositif de protection (1) selon l'une des revendications précédentes disposé, selon la direction longitudinale du véhicule, entre le tablier (7) et le pédalier.

## Patentansprüche

1. Vorrichtung für den Schutz eines Fußes eines Fahrers, die dazu bestimmt ist, eine Fahrzeugstirnwand (7) auszustatten, wobei die Vorrichtung eine Grundplatte (2) umfasst, über der eine erste Stufe (3) entlang der Richtung der X'X-Achse liegt, wobei die erste Stufe (3) eine Fußablage bildet und eine Setzstufe aufweist, erste Setzstufe (30) genannt, Vorrichtung **dadurch gekennzeichnet, dass** über der ersten Stufe (3) eine zweite Stufe (4) entlang der Richtung der X'X-Achse liegt, wobei die zweite Stufe (4) eine Setzstufe aufweist, zweite Setzstufe (40) genannt, und dass die erste Setzstufe (30) und die Grundplatte (2) eine Aufnahme (20) bilden, die ausgebildet ist, damit sich in einer maximalen Eindrückposition eines Pedals eine Kufe, die das Pedal ausstattet, in der Aufnahme (20) positionieren kann, und dass die zweite Setzstufe (40) einen Anschlag für den Fuß des Fahrers bildet.

2. Vorrichtung nach Anspruch 1, wobei die Grundplatte (2) und die erste Stufe (3) aus einem Stück bestehen.

3. Vorrichtung nach Anspruch 1 oder 2, wobei die zweite Stufe (4) eine Trittfläche aufweist, zweite Trittfläche (41) genannt, die derart ausgehöhlt ist, dass sie im Querschnitt zu der X'X-Achse einen Abschnitt mit komplementärer Form zu einer Lenksäule (5) aufweist.

4. Vorrichtung nach einem der vorhergehenden Ansprüche, wobei die erste Stufe (3) und die zweite Stufe (4) aus einem Stück bestehen.

5. Vorrichtung nach einem der vorhergehenden Ansprüche, wobei die erste Stufe (3) eine Trittfläche, erste Trittfläche (31) genannt, aufweist, die eine vorstehende Platte (6) umfasst, die sich in einer Ebene im Wesentlichen senkrecht zu der Ebene der ersten Trittfläche (31) entlang der Richtung der Y'Y-Achse erstreckt.

6. Vorrichtung nach Anspruch 5, wobei die erste Stufe (3) und die vorstehende Platte (6) aus einem Stück bestehen.

7. Vorrichtung nach einem der vorhergehenden Ansprüche, die außerdem Mittel zum Befestigen an der Stirnwand (7) umfasst.

8. Kraftfahrzeug, das eine Stirnwand (7) umfasst, auf der eine Pedaleinheit befestigt ist, **dadurch gekennzeichnet, dass** es eine Schutzvorrichtung (1) nach einem der vorhergehenden Ansprüche umfasst, die entlang der Längsrichtung des Fahrzeugs zwischen der Stirnwand (7) und der Pedaleinheit angeordnet ist.

## Claims

1. A device for protecting the foot of a driver, intended to equip a fire wall (7) of a vehicle, said device comprising a base (2) with a first step (3) on top in the X'X axis direction, said first step (3) forming a footrest and having a riser or first riser (30), said device being **characterized in that** the first step (3) has a second step (4) on top in the X'X axis direction, said second step (4) having a riser or second riser (40) and **in that** said first riser (30) and said base (2) define a housing (20) shaped so that, in a position of maximum depression of a pedal, a pad equipping said pedal can be positioned in said housing (20) and that the second riser (40) forms a stop for the driver's foot.

2. The device according to Claim 1, in which the base (2) and the first step (3) are a single piece.

3. The device according to Claim 1 or 2, in which the second step (4) has a tread, or second tread (41), hollowed out so as to present in transverse section to the X'X axis a portion of complementary shape to a steering column (5).

4. The device according to any one of the preceding claims, in which the first step (3) and the second step (4) are a single piece.

5. The device according to any one of the preceding claims, in which the first step (3) has a tread, or first tread (31), comprising a projecting plate (6) extending in a plane substantially perpendicular to the plane of said first tread (31), in the Y'Y axis direction.

6. The device according to Claim 5, in which the first step (3) and the projecting plate (6) are a single piece.

7. The device according to any one of the preceding claims, further comprising means for attachment to the fire wall (7).

8. A motor vehicle comprising a fire wall (7) on which a pedal set is attached, **characterized in that** it comprises a protection device (1) according to one of the preceding claims disposed, along the longitudinal direction of the vehicle, between the fire wall (7) and the pedal set.
